# EUROPEAN PATENT APPLICATION

(11) **EP 4 389 586 A1**
(43) Date of publication of application: **26.06.2024**
(21) Application number: 22934622.6
(22) Date of filing: 26.07.2022
(51) Int. Cl.: B63B 59/10, B62D 57/024, B63B 57/02

(54) **WALL-CLIMBING CLEANING ROBOT**

(30) Priority: 28.03.2022 CN 202210313483
(71) Applicant: Shenzhen Aka Robotics Technology Co., Ltd., Shenzhen, Guangdong 518108 (CN)
(72) Inventor: OU, Xiefeng, Shenzhen, Guangdong 518108 (CN); WANG, Xingchao, Shenzhen, Guangdong 518108 (CN); LI, Jiuhua, Shenzhen, Guangdong 518108 (CN); LIU, Huanjin, Shenzhen, Guangdong 518108 (CN); DENG, Jing, Shenzhen, Guangdong 518108 (CN); CHEN, Jiankun, Shenzhen, Guangdong 518108 (CN)
(74) Representative: Ashton, Gareth Mark
(86) International application number: PCT/CN2022/107978
(87) International publication number: WO 2023/184801

(57) **Abstract**

A wall-climbing cleaning robot, comprising a frame (1), a first driving mechanism (2), a second driving mechanism (3), a first magnetic adsorption mechanism (4), and a cleaning mechanism (5). The first driving mechanism (2) is connected to the frame (1) and is provided with a first driving wheel (21); the second driving mechanism (3) is connected to the frame (1) and is provided with a second driving wheel (31) arranged opposite to the first driving wheel (21); the first magnetic adsorption mechanism (4) is located between the first driving wheel (21) and the second driving wheel (31) and is provided with a first magnetic adsorption structure (41), and the distance between the first magnetic adsorption structure and a prepared cleaning wall can be adjusted; and the cleaning mechanism (5) is located in front of the frame (1) and is rotatably connected to the frame (1). The wall-climbing cleaning robot can achieve transition between a plurality of wall surfaces of a ship, and the adaptability of the cleaning mechanism is enhanced.

## Description

### TECHNICAL FIELD

The present application relates to the technical field of industrial cleaning, and more specifically, to a wall-climbing cleaning robot.

### BACKGROUND

Vessels or ships that navigate on water for extended periods often suffer from extensive paint corrosion and rusting on their surfaces. These rusts will significantly impact the safety of navigation, prompting the need for periodic surface rust removal, scraping, and repainting before they can continue operating. Most ships are cargo ships, which require extensive cleaning of cargo holds each time they are loaded, resulting in a large cleansing workload. Currently, surface cleaning of domestic ships primarily relies on manual labor, which is not only inefficient but also poses significant safety risks and leads to serious environmental pollution. Therefore, in order to address such situation, one solution is to develop a wall-climbing cleaning robot for ship surface cleaning. The robot uses ultra-high-pressure water for cleaning. Meanwhile, the wall-climbing cleaning robot can reach high places on the ships that are difficult for workers to reach, thereby ensuring high-quality cleaning. The wall-climbing cleaning robot for ship rust removal and cleaning offers a more environmentally friendly and safer option, providing an efficient and feasible solution for cleaning and maintaining large ships.

Inner wall surfaces of most cargo holds of cargo ships are complex. The wall-climbing cleaning robot needs to move between a plurality of wall surfaces in the cargo holds, and there is a certain angle between the respective wall surfaces. Existing wall-climbing cleaning robots are suitable for crawling on uniform wall surfaces or wall surfaces with small curvatures, but cannot transition between wall surfaces with a certain inclination angle and cannot walk on complex surfaces in the cargo holds. Most wall-climbing cleaning robots will get stuck or have their wheels spinning when encountering an inclined wall surface, having no wall transition capability. Cargo hold cleaning is generally divided into surface cleaning and deep rust removal, which requires the robot to have a variety of cleaning functions and be able to adapt to the needs of different types of cargo hold cleaning. Many robots are equipped with rust removal and cleaning devices that can achieve good cleaning effects on uniform walls. However, in the face of the complex wall environment in cargo holds, the cleaning mechanism equipped on the robot cannot adapt to the transition surface at a certain angle and cannot meet the standards for rust removal.

One of the existing solutions involves using a magnetic adsorption wall-climbing cleaning robot for cleaning operations. However, the technology of current wall-climbing cleaning robots also has the following technical shortcomings:
(1) Wall-climbing cleaning robots cannot complete the transition between inclined wall surfaces. Existing wall-climbing cleaning robots do not have the structure to transition between inclined wall surfaces, cannot cross wall surfaces with a certain inclination angle, and are prone to getting stuck or slipping at the transition when encountering inclined wall surfaces. The reason is attributed to the fact that the magnetic adsorption structures of the existing wall-climbing cleaning robots are all installed at the bottoms of the robots, which cannot provide magnetic adsorption forces for a front transition surface, and thus do not have enough traction.
(2) Cleaning mechanisms of wall-climbing cleaning robots cannot adapt to the characteristics of wall surface transition. The cleaning mechanisms of existing robots are mainly aimed at the cleaning process of metal surfaces. When encountering a front transition surface, this type of cleaning mechanisms will rigidly collide with the transition surface, causing damage to the cleaning mechanisms.
(3) The wall-climbing cleaning robots have a single function. Current wall-climbing cleaning robots are mainly targeted at cleaning tasks in a certain field and do not have corresponding functions when facing other working conditions. For example, most current wall-climbing cleaning robots are targeted at rust removal tasks on the outer walls of ships. However, when encountering inner walls of the cargo holds of the ships, the rust removal and cleaning function cannot be achieved due to structural limitations. The single function limits the usage scenarios of the robots.
(4) The wall-climbing cleaning robots have a large structure span and are limited in walking. At present, most wall-climbing cleaning robots are divided into crawler type robots and wheel type robots. However, these two types of robots are large in width and cannot clean small areas. Regarding the internal structure of cargo holds, existing robots cannot enter the middle of the floor inside the cargo holds for cleaning, so that the cleaning area is limited.
(5) The wall-climbing cleaning robots are difficult to assemble and maintain. The existing wall-climbing cleaning robots have a complex structure, and the respective components are assembled integrally, making disassembly and maintenance complicated when the robots fail during on-site operations, which greatly reduces the work efficiency of the robots.

### SUMMARY

An objective of the present application is to provide a wall-climbing cleaning robot, so as to solve the technical problems existing in the prior art that wall-climbing cleaning robots cannot complete the transition on inclined wall surfaces, and have a single function, and are limited in walking and difficult to maintain, and the inability of cleaning mechanisms to adapt to wall surface transition.

In order to achieve the above objective, the technical solution adopted in the present application is a wall-climbing cleaning robot, including:
a frame;
a first drive mechanism connected to the frame, the first drive mechanism being provided with a first driving wheel;
a second drive mechanism connected to the frame, the second drive mechanism being provided with a second driving wheel that is arranged opposite to the first driving wheel;
a first magnetic adsorption mechanism connected to the frame and located between the first driving wheel and the second driving wheel, the first magnetic adsorption mechanism being provided with a first magnetic adsorption structure that is magnetic, and a distance between the first magnetic adsorption structure and a prepared cleaning wall being adjustable; and
a cleaning mechanism located in front of the frame and rotatably connected to the frame.

By adopting the above technical solution:
1. The wall-climbing cleaning robot can transition to inclined wall surfaces to realize the transition between a plurality of wall surfaces of a ship;
2. The cleaning mechanism is rotatably connected to the frame, so that the cleaning mechanism can adapt to the front transition surface and rotate to prevent rigid collision with the front transition surface, which would otherwise cause damage to the cleaning mechanism;
3. The wall-climbing cleaning robot in this embodiment can complete cleaning tasks of outer and inner walls of the ship, and can also adapt to walking on metal curved surfaces of ships, wind towers, oil tanks, etc., which enhances the functionality of the wall-climbing cleaning robot and expands its usage scenarios;
4. Walking flexibility and steering sensitivity are improved to enable access to smaller areas on inner walls of the ship to perform cleaning tasks, thus reducing the degree of restriction of cleaning areas;
5. The mechanism components are easy to assemble and disassemble and low in maintenance difficulty, thus improving the work efficiency.

In an embodiment, the first magnetic adsorption structure includes an arc-shaped first magnet protective shell and a plurality of first magnets arranged along an arc direction of the first magnet protective shell.

By adopting the above technical solution, the plurality of first magnets arranged in an arc can adapt to the angle between a bottom contact surface and the front transition surface, so that the first magnetic adsorption structure can generate a sufficient adsorption force with both the bottom contact surface and the front transition surface. Therefore, both the first driving wheel and the second driving wheel can generate sufficient driving friction.

In an embodiment, magnetism of the plurality of first magnets gradually decreases from top to bottom along the arc direction of the first magnet protective shell.

By adopting the above technical solution, when the first magnetic adsorption structure is close to the front transition surface, due to a strong magnetism of the first magnets located at an upper end, a large adsorption force can be generated to facilitate the wall-climbing cleaning robot to climb to the front transition surface. Meanwhile, due to a weak magnetism of the first magnets located at a lower end, a weak adsorption force is generated to facilitate separation from the bottom contact surface, allowing the wall-climbing cleaning robot to smoothly transition to the front transition surface.

In an embodiment, the first magnetic adsorption structure further includes a first magnet mounting base connected to the first magnet protective shell, an adjusting fastener is connected between the first magnet mounting base and the frame, and a position of the first magnet mounting base relative to the frame is adjustable, to move the first magnets towards or away from the prepared cleaning wall.

By adopting the above technical solution, the adjustable magnetic force of the first magnetic adsorption structure enables the robot to achieve an appropriate magnetic adsorption force on different wall surfaces, thus improving the adaptability of the wall-climbing cleaning robot to different operating wall surfaces.

In an embodiment, a central angle corresponding to an arc length of the first magnet protective shell is 100° to 140°.

By adopting the above technical solution, the plurality of first magnets are arranged in the arc direction of the first magnet protective shell, which is conducive to generating the appropriate adsorption force with the front transition surface and the bottom contact surface.

In an embodiment, the cleaning mechanism includes a cleaning disc, a rotating arm and a clamping structure, where the clamping structure is connected to a front rotating shaft of the frame, the cleaning disc is located in front of the frame, and the rotating arm is rotatably connected to the cleaning disc and the clamping structure so that the cleaning disc is rotatable around the front rotating shaft.

By adopting the above technical solution, the cleaning mechanism is detachably connected to the frame through the clamping structure so that the cleaning mechanism forms a modular component for easy disassembly and maintenance.

In an embodiment, the cleaning mechanism further includes an telescopic push rod; the telescopic push rod is connected to the frame and the cleaning disc, and the telescopic push rod is capable of being extended and retracted to keep the cleaning disc in constant contact with the prepared cleaning wall.

By adopting the above technical solution, a support force of the telescopic push rod can keep the cleaning mechanism in constant contact with the wall surface, thus improving the stability of the cleaning mechanism.

In an embodiment, the cleaning mechanism further includes a transition wheel mechanism arranged on the cleaning disc.

By adopting the above technical solution, the friction force when the cleaning mechanism moves to the front transition surface is reduced, making the cleaning mechanism move more smoothly to the front transition surface.

In an embodiment, the wall-climbing cleaning robot further includes a second magnetic adsorption mechanism, where the second magnetic adsorption mechanism is connected to the frame and located on one side of the first magnetic adsorption mechanism away from the cleaning mechanism, the second magnetic adsorption mechanism includes a second magnetic adsorption structure and a moving wheel, the moving wheel is rotatably connected to the frame, and the second magnetic adsorption structure is mounted on one side of the moving wheel.

By adopting the above technical solution, when the robot normally walks on a wall surface, the moving wheel contacts the wall surface and can rotate with the rotation of the wall-climbing cleaning robot, ensuring the flexible steering of the wall-climbing cleaning robot. Meanwhile, the moving wheel always maintains good adsorption with the wall surface, preventing the robot from slipping and overturning.

In an embodiment, the second magnetic adsorption structure includes an arc-shaped second magnet protective shell and a plurality of second magnets arranged in an arc direction of the second magnet protective shell, and magnetism of the plurality of second magnets gradually decreases from front to back along the arc direction of the second magnet protective shell.

By adopting the above technical solution, during transition between wall surfaces, this magnet arrangement makes the adsorption force of the robot on the bottom contact surface gradually decrease, so that the magnetic adsorption device at the rear end of the robot can more easily break away from the bottom contact surface and transition to the front contact surface. When the robot walks normally, the stainless steel universal wheel contacts the wall surface and can rotate with the rotation of the robot, ensuring the flexible steering for the robot. Meanwhile, the universal wheel always maintains good adsorption with the wall surface, preventing the robot from slipping and overturning.

### BRIEF DESCRIPTION OF DRAWINGS

In order to more clearly illustrate the technical solutions in the embodiments of the present application, the drawings required to be used in the embodiments will be briefly introduced below. Obviously, the drawings in the following description are only some embodiments of the present application. Those of ordinary skill in the art can also obtain other drawings based on these drawings without making creative efforts.
FIG. 1 is a three-dimensional structural view of a wall-climbing cleaning robot provided in an embodiment of the present application;
FIG. 2 is a wall-climbing schematic view of the wall-climbing cleaning robot provided in an embodiment of the present application;
FIG. 3 is a three-dimensional structural view of a first magnetic adsorption mechanism provided in an embodiment of the present application;
FIG. 4 is a bottom view of the wall-climbing cleaning robot provided in an embodiment of the present application; and
FIG. 5 is a top view of the wall-climbing cleaning robot provided in an embodiment of the present application.

### Reference numerals in the drawings:

100-wall-climbing cleaning robot;
10-bottom contact surface; 20-front transition surface;
1-frame; 2-first drive mechanism; 3-second drive mechanism; 4-first magnetic adsorption mechanism; 5-cleaning mechanism; 6-second magnetic adsorption mechanism; 7-control cabinet; 8-pipe holder;
21-first driving wheel; 31-second driving wheel; 41-first magnetic adsorption structure; 51-cleaning disc; 52-rotating arm; 53-clamping structure; 54-cleaning tool holder; 55-telescopic push rod; 56-tension elastic member; 57-transition wheel mechanism; 61-second magnetic adsorption structure; 62-moving wheel;
411-first magnet protective shell; 412-first magnet; 413-first magnet mounting base; 571-omni-directional wheel; 611-second magnet protective shell; and 612-second magnet.

### DETAILED DESCRIPTION

In order to make the technical problems to be solved, technical solutions and beneficial effects of the present application clearer, the present application will be further described in detail below in conjunction with the drawings and embodiments. It should be understood that the specific embodiments described here are only used to explain the present application and are not used to limit the present application.

It should be noted that when an element is referred to as being "fixed to" or "arranged on" another element, the element can be located directly or indirectly on the other element. When an element is referred to as being "connected to" another element, the element can be directly or indirectly connected to the other element.

It should be understood that the orientation or positional relationships indicated by the terms "length", "width", "upper", "lower", "front", "back", "left", "right", "vertical", "horizontal", "top", "bottom", "inside", "outside", etc. are based on the orientation or positional relationships shown in the accompanying drawings, are only for the convenience of describing the present application and do not indicate that the device or component must have a specific orientation and is constructed and operated in a specific orientation, and therefore cannot be construed as a limitation to the present application.

Furthermore, the terms "first" and "second" are used for descriptive purposes only and are not to be understood as indicative of relative importance or indicative of the number of technical features. In the description of the present application, "a plurality of" means two or more, unless otherwise explicitly and specifically limited. The specific implementation of the present application is described in more detail below in conjunction with specific embodiments.

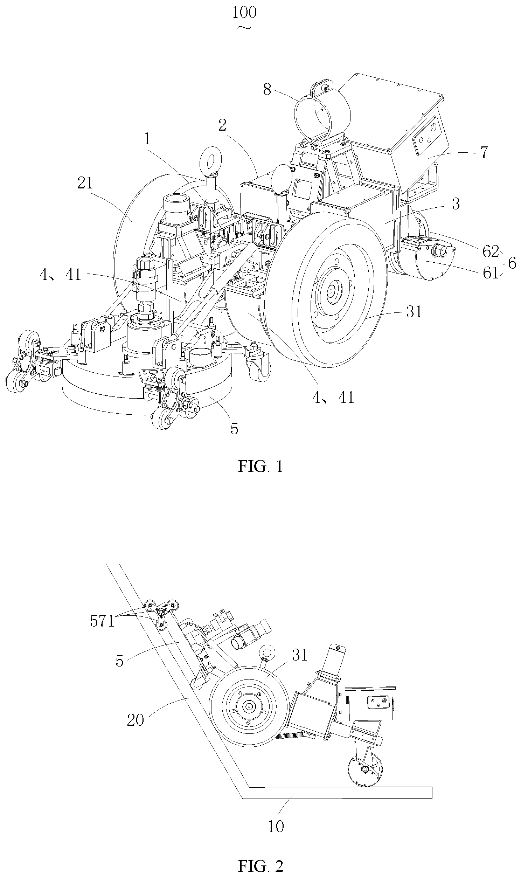

As shown in FIGS. 1 and 2, a wall-climbing cleaning robot 100 provided in an embodiment of the present application is used to clean a metal wall surface of a ship.

The wall-climbing cleaning robot 100 in the embodiment includes: a frame 1, a first drive mechanism 2, a second drive mechanism 3, a first magnetic adsorption mechanism 4, and a cleaning mechanism 5. The frame 1 is used as a body part of the wall-climbing cleaning robot 100. The first drive mechanism 2 is connected to the frame 1, and the first drive mechanism 2 is provided with a first driving wheel 21. The second drive mechanism 3 is connected to the frame 1, and the second drive mechanism 3 is provided with a second driving wheel 31 arranged opposite to the first driving wheel 21. The first driving wheel 21 and the second driving wheel 31 are respectively located on left and right sides of the frame 1 and are arranged symmetrically. The first driving wheel 21 and the second driving wheel 31 can rotate forward and reverse at adjustable rotational speeds, so that the wall-climbing cleaning robot 100 can move forward, move backward, turn left, turn right and turn around in place. The first magnetic adsorption mechanism 4 is connected to the frame 1 and located between the first driving wheel 21 and the second driving wheel 31. The first magnetic adsorption mechanism 4 is provided with a first magnetic adsorption structure 41 that is magnetic, and the distance between the first magnetic adsorption structure 41 and a prepared cleaning wall is adjustable. The cleaning mechanism 5 is located in front of the frame 1 and is rotatably connected to the frame 1.

The working principle of the wall-climbing cleaning robot 100 provided in the embodiment is as follows.

The cleaning mechanism 5 is used to clean outer or inner walls of a ship. The cleaning methods include but are not limited to high-pressure water washing and tool holder scraping. The cleaning mechanism 5 is located in front of the frame 1 so that the frame 1 can guide the cleaning mechanism 5 to move forward toward the prepared cleaning wall. The prepared cleaning wall includes a bottom contact surface 10 and a front transition surface 20. The bottom contact surface 10 is generally parallel to the horizontal plane, and the front transition surface 20 is connected to the bottom contact surface 10. The front transition surface 20 and the bottom contact surface 10 may be at a predetermined angle of at least 120°

An operator places the wall-climbing cleaning robot 100 on the bottom contact surface 10. The first driving wheel 21 and the second driving wheel 31 are in contact with the bottom contact surface 10, and the distance between the first magnetic adsorption structure 41 located between the first driving wheel 21 and the second driving wheel 31 and the wall surface is adjusted so that the magnetic adsorption structure 41 and the bottom contact surface 10 attract each other, thereby causing the first driving wheel 21 and the second driving wheel 31 to be pressed against the bottom contact surface 10.

The first driving wheel 21 and the second driving wheel 31 receive a mobile cleaning signal and start to rotate, driving the wall-climbing cleaning robot 100 to move towards a target area to be cleaned. The cleaning mechanism 5 is located in front of the frame 1, and the cleaning mechanism 5 starts to clean the passing area.

When the cleaning mechanism 5 advances to a junction between the bottom contact surface 10 and the front transition surface 20, since the cleaning mechanism 5 is rotatably connected to the frame 1, the force generated by the advancement of the frame 1 can cause the cleaning mechanism 5 to rotate around the frame 1 and continue to move along the front transition surface 20 until the cleaning mechanism 5 covers the front transition surface 20, so as to achieve cleaning of the front transition surface 20.

The first driving wheel 21 and the second driving wheel 31 continue to move forward until moving to the front transition surface 20. The magnetism of the first magnetic adsorption structure 41 can enable the wall-climbing cleaning robot 100 to stay on the front transition surface 20 that is inclined relative to the horizontal plane. In addition, sufficient frictional traction is generated between the first driving wheel 21 and the second driving wheel 31 and the front transition surface 20 so that the wall climbing cleaning robot 100 can walk along the front transition surface 20.

By adopting the above technical solutions:
1. The wall-climbing cleaning robot 100 in the embodiment walks by means of the first driving wheel 21 and the second driving wheel 31 to drive the cleaning mechanism 5 to walk on and clean a prepared cleaning wall. During this process, the magnetic force of the first magnetic adsorption structure 41 located between the first driving wheel 21 and the second driving wheel 31 can attract the prepared cleaning wall, which enables the first driving wheel 21 and the second driving wheel 31 to generate a sufficient frictional traction force with the prepared cleaning wall so that the wall-climbing cleaning robot 100 walks on the bottom contact surface 10 and the front transition surface 20 for cleaning. It needs to be further explained that when the cleaning mechanism 5 moves to the front transition surface 20, the force exerted by the frame 1 and the front transition surface 20 on the cleaning mechanism 5 causes the cleaning mechanism 5 to advance along the front transition surface 20 and rotate around the frame 1 so that the frame 1 can approach the front transition surface 20. Since the wall-climbing cleaning robot 100 in the embodiment is driven by the first driving wheel 21 and the second driving wheel 31, compared with arrangement of a magnetic adsorption structure at the bottom of the robot, the embodiment can make the first magnetic adsorption structure 41 located between the first driving wheel 21 and the second driving wheel 31 sufficiently close to the front transition surface 20, thereby creating a magnetic adsorption force directly facing the front transition surface 20. Accordingly, the first driving wheel 21 and the second driving wheel 31 generate sufficient friction and traction to complete the transition of the wall-climbing cleaning robot 100 to an inclined wall and realize the transition between a plurality of wall surfaces of the ship.
2. The cleaning mechanism 5 is rotatably connected to the frame 1 so that the cleaning mechanism 5 can adapt to the front transition surface 20 and rotate to prevent rigid collision with the front transition surface 20, which would otherwise cause damage to the cleaning mechanism 5.
3. The wall-climbing cleaning robot 100 in the embodiment can complete cleaning tasks of outer and inner walls of the ship, and can also adapt to walking on metal curved surfaces of ships, wind towers, oil tanks, etc., which enhances the functionality of the wall-climbing cleaning robot 100 and expands its usage scenarios.
4. The wall-climbing cleaning robot 100 in the embodiment walks by means of the first driving wheel 21 and the second driving wheel 31, which shortens the size of the wall-climbing cleaning robot 100 and improves the walking flexibility and steering sensitivity as well, so that the wall-climbing cleaning robot 100 can enter smaller areas on inner walls of the ship to perform cleaning tasks, thus reducing the degree of restriction of cleaning areas.
5. The wall-climbing cleaning robot 100 in the embodiment includes a frame 1, a first driving wheel 21, a second driving wheel 31, a first magnetic adsorption mechanism 4, and a cleaning mechanism 5. The wall-climbing cleaning robot 100 adopts a modular design as a whole, and is compact in structure, light in weight, easy for assembly and disassembly of each mechanism component, and low in maintenance difficulty, thereby improving the work efficiency.

In an embodiment, the first drive mechanism 2 and the second drive mechanism 3 are symmetrically arranged on both sides of the frame 1. The first drive mechanism 2 and the second drive mechanism 3 have the same type, but located in different positions in the embodiment, and are thus called the first drive mechanism 2 and the second drive mechanism 3, respectively. Each of the first drive mechanism 2 and the second drive mechanism 3 includes a drive motor and a reducer connected to the drive motor. An extended shaft of the motor is directly connected to the reducer, and the first driving wheel 21 and the second driving wheel 31 are each connected to the corresponding extended shaft at one end where the reducer is located through an expansion sleeve. The structure is simple and easy to control. This connection method has a large output torque and an increased load capacity. The expansion sleeves can prevent the wall-climbing cleaning robot 100 from being damaged due to motor overload as a result of motion jamming. The first driving wheel 21 and the second driving wheel 31 are rubber wheels with aluminum alloy hubs, which are safe and reliable. The friction coefficient with wall surfaces is large, which can provide sufficient frictional traction, thereby reducing the weight of the magnets that provide the magnetic adsorption force, and creating conditions for the lightweight of the robot. The drive motor has been waterproofed and covered with an aluminum alloy waterproof shell. The contact surface between the entire shell and the drive motor is sealed by a sealing ring, so that the drive motor can work continuously in a water mist environment for a long time. The first drive mechanism 2 and the second drive mechanism 3 are arranged left and right symmetrically, and the first drive mechanism 2 and the second drive mechanism 3 are connected to the middle frame 1. The frame 1 is formed by connection of left and right support plates, and its structural design has high strength and strong bending resistance.

By adopting the above technical solution, the arrangement of the drive walking mechanisms, such as the first drive mechanism 2 and the second drive mechanism 3, and the frame 1 can greatly reduce the size of the robot in the width direction, and thus more narrow areas can be cleaned, and the environmental adaptability is better.

In an embodiment, there are two first magnetic adsorption mechanisms 4, both of which are located between the first driving wheel 21 and the second driving wheel 31. One of the first magnetic adsorption mechanisms 4 is disposed close to the first driving wheel 21 and coaxial with the first driving wheel 21. The other first magnetic adsorption mechanism 4 is disposed close to the second driving wheel 31 and coaxial with the second driving wheel 31.

By adopting the above technical solution, the two first magnetic adsorption mechanisms 4 respectively attract the areas corresponding to the bottom contact surface 10 where the first driving wheel 21 and the second driving wheel 31 are in contact, so that the first driving wheel 21 and the second driving wheel 31 can generate sufficient traction friction to improve the grip of the first driving wheel 21 and the second driving wheel 31, making wall climbing more stable.

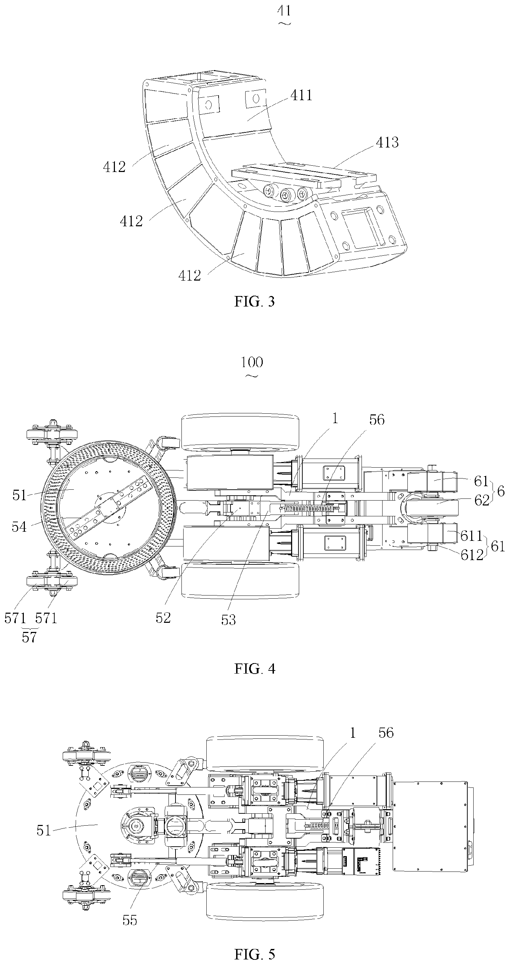

Please also referring to FIG. 3, in an embodiment, each of the first magnetic adsorption structures 41 includes an arc-shaped first magnet protective shell 411 and a plurality of first magnets 412 arranged in the arc direction of the first magnet protective shell 411. Some of the first magnets 412 face the bottom contact surface 10, and the other of the first magnets 412 face the front transition surface 20.

Optionally, a plurality of first magnets 412 of different sizes are arranged in a special form to form a permanent magnet. The purpose of designing into an arc shape is that, when the wall-climbing cleaning robot 100 transitions between wall surfaces, the permanent magnet can provide a sufficient adsorption force to both the bottom contact surface 10 and the front transition surface 20, and the driving friction force generated by the adsorption force can pull the wall-climbing cleaning robot 100 to crawl forward.

By adopting the above technical solution, the plurality of first magnets 412 arranged in an arc can adapt to an angle between the bottom contact surface 10 and the front transition surface 20, so that the first magnetic adsorption structures 41 can generate the sufficient adsorption force to both the bottom contact surface 10 and the front transition surface 20, and thus, both the first driving wheel 21 and the second driving wheel 31 can generate the sufficient driving friction force.

In an embodiment, the magnetism of the plurality of first magnets 412 gradually decreases from top to bottom in the arc direction of the first magnet protective shell 411.

Specifically, the adsorption force of the entire arc-shaped permanent magnet to the wall surface gradually decreases from top to bottom along the arc line. The change characteristics of this adsorption force exactly meet the mechanical relationship required for wall surface transition.

By adopting the above technical solution, when the first magnetic adsorption structures 41 are close to the front transition surface 20, due to a strong magnetism of the first magnets 412 located at an upper end, a large adsorption force can be generated to facilitate the wall-climbing cleaning robot 100 to climb to the front transition surface 20. Meanwhile, due to a weak magnetism of the first magnets 412 located at a lower end, a weak adsorption force is generated to facilitate separation from the bottom contact surface 10, allowing the wall-climbing cleaning robot 100 to smoothly transition to the front transition surface 20.

In an embodiment, each of the first magnetic adsorption structures 41 further includes a first magnet mounting base 413 connected to the respective first magnet protective shell 411, an adjusting fastener such as an adjusting bolt is connected between the first magnet mounting base 413 and the frame 1, and a position of the first magnet mounting base 413 relative to the frame 1 is adjustable to move the first magnets 412 towards or away from the prepared cleaning wall.

Specifically, the two first magnetic adsorption structures 41 are respectively connected to flanges at the bottoms of the reducers on both sides through the first magnet mounting bases 413, and each first magnetic adsorption structure 41 maintains a certain gap with the wall surface, which improves the obstacle-crossing ability of the robot. The first magnetic adsorption structures 41 have a certain magnetic force adjustment capability. A vertical distance between the first magnetic adsorption structures 41 and the bottom contact surface 10 and the front transition surface 20 are adjusted through the adjustment bolts of the first magnet mounting bases 413, thereby achieving the purpose of adjusting the magnetic adsorption force.

By adopting the above technical solution, the adjustable magnetic force of the first magnetic adsorption structures 41 enables the robot to achieve the appropriate magnetic adsorption force on different wall surfaces, thereby improving the adaptability of the wall-climbing cleaning robot 100 to different operating wall surfaces.

In an embodiment, a central angle corresponding to an arc length of the first magnet protective shell 411 is 100° to 140°.

Preferably, the central angle corresponding to the arc length of the first magnet protective shell 411 is 120°, the radial direction of the upper end of the first magnet protective shell 411 is parallel to the horizontal plane, and the radial direction of the lower end of the first magnet protective shells 411 points to the bottom contact surface 10.

By adopting the above technical solution, the plurality of first magnets 412 are arranged in the arc direction of the first magnet protective shell 411, which is conducive to generating the appropriate adsorption force with the front transition surface 20 and the bottom contact surface 10.

Please also referring to FIG. 4, in an embodiment, the cleaning mechanism 5 includes a cleaning disc 51, a rotating arm 52, and a clamping structure 53. The clamping structure 53 is connected to a front rotating shaft of the frame 1, the cleaning disc 51 is located in front of the frame 1, and the rotating arm 52 is rotatably connected to the cleaning disc 51 and the clamping structure 53 so that the cleaning disc 51 can rotate around the front rotating shaft.

Specifically, the cleaning mechanism 5 has an adaptive function, and includes a cleaning disc 51, a cleaning tool holder 54, a rotating arm 52, and a clamping structure 53. The clamping structure 53 is rotatably connected to the front rotating shaft on the frame 1, and then connects the rotating clamping structure 53 and the cleaning disc 51 together through the rotating arm 52. In this way, the entire cleaning mechanism 5 can rotate around the front rotating shaft on the frame 1. This rotating arm 52 mechanism is flexible, stable, and highly reliable. The function of adaptive transition to the wall surface for the cleaning mechanism 5 can be accomplished by the rotating arm 52. When the wall-climbing cleaning robot 100 moves to the front transition surface 20, the cleaning disc 51 will contact the front transition surface 20. Under the action of the support force of the front transition surface 20 and the driving force of the wall-climbing cleaning robot 100 moving forward, the front transition surface 20 will drive the cleaning disc 51 to rotate around the front rotation shaft, thereby changing the direction of a thrust force acting on the cleaning mechanism 5, causing the entire cleaning mechanism 5 to move upward along the wall surface. The wall-climbing cleaning robot 100 completes the task of wall cleaning and rust removal through the cooperation of the cleaning tool holder 54 on the cleaning disc 51 and the rotating body. Ultra-high-pressure water enters the cleaning tool holder 54 through the rotating body. A high-pressure nozzle is mounted on the surface of the cleaning tool holder 54. The ultra-high-pressure water will be sprayed from the inside of the cleaning tool holder 54 to the wall surface through the high-pressure nozzle, thereby completing the rust removal and cleaning of the wall surface. Meanwhile, the cleaning disc 51 is equipped with a sewage recovery hole and a recovery tee. The sewage after cleaning is recycled to a special sewage treatment device through the sewage recovery hole and the recovery tee under the action of a vacuum pump.

By adopting the above technical solution, the cleaning mechanism 5 is detachably connected to the frame 1 through the clamping structure 53, so that the cleaning mechanism 5 forms a modular component, which is convenient for disassembly and maintenance.

As shown in FIG. 5, in an embodiment, the cleaning mechanism 5 further includes telescopic push rods 55. The telescopic push rods 55 are connected to the frame 1 and the cleaning disc 51. The telescopic push rods 55 can extend and retract to keep the cleaning disc 51 in constant contact with the prepared cleaning wall.

Specifically, considering the reactive force of the ultra-high-pressure water jet on the cleaning mechanism 5, two telescopic push rods 55 are mounted on the robot. One end of each of the telescopic push rods 55 is connected to the reducer and the other end thereof is connected to the cleaning disc 51.

By adopting the above technical solution, the support force of the telescopic push rods 55 can keep the cleaning mechanism 5 in constant contact with the wall surface, thereby improving the stability of the cleaning mechanism 5.

In an embodiment, the cleaning mechanism 5 further includes a tension elastic member 56, such as a tension spring. One end of the tension elastic member 56 is connected to the bottom of the frame 1, and the other end is connected to the cleaning mechanism 5, specifically to an extension plate of the clamping structure 53.

By adopting the above technical solution, when the wall-climbing cleaning robot 100 transitions between wall surfaces, in order to prevent the cleaning mechanism 5 from overturning and keep the cleaning mechanism 5 close to the wall surface, the robot is designed with a tension elastic member 56 so that the cleaning mechanism 5 will be limited by the tension elastic member 56 when rotating excessively, thereby preventing overturning.

In an embodiment, the cleaning mechanism 5 further includes a transition wheel mechanism 57, arranged on the cleaning disc 51.

Optionally, there are two transition wheel mechanisms 57, which are respectively mounted on both sides of the front end of the cleaning disc 51. Each of the transition wheel mechanisms 57 include three omni-directional wheels 571, and these three omni-directional wheels 571 can rotate around the transition rotating shaft. When the robot moves to the front transition surface 20, the omni-directional wheels 571 will be in contact with the front transition surface 20. Under the action of the support force of the front transition surface 20 and the forward driving force of the robot, the omni-directional wheels 571 will rotate around the transition rotating shaft, thereby changing the direction of a thrust force acting on the cleaning mechanism 5, causing the entire cleaning mechanism 5 to move upward along the wall surface.

By adopting the above technical solution, the friction force when the cleaning mechanism 5 moves to the front transition surface 20 is reduced, so that the cleaning mechanism 5 moves to the front transition surface 20 more smoothly.

Please referring to FIGS. 1 and 4, in an embodiment, the wall-climbing cleaning robot 100 further includes second magnetic adsorption mechanisms 6. The second magnetic adsorption mechanisms 6 are connected to the frame 1 and located on the sides of the first magnetic adsorption mechanisms 4 away from the cleaning mechanism 5. Each of the second magnetic adsorption mechanisms 6 includes a second magnetic adsorption structure 61 and a moving wheel 62. The moving wheel 62 is rotatably connected to the frame 1, and the second magnetic adsorption structure 61 is mounted on one side of the moving wheel 62.

Specifically, the wall-climbing cleaning robot 100 further includes a control cabinet 7. The control cabinet 7 is arranged at a rear end of the frame 1. The second magnetic adsorption mechanisms 6 are mounted at the bottom of the control cabinet 7. The two second magnetic adsorption mechanisms 6 are symmetrically mounted on both sides of the moving wheel 62 such as a stainless steel universal wheel through a wheel frame shaft.

By adopting the above technical solution, when the robot normally walks on the wall surface, the moving wheel 62 is in contact with the wall surface and can rotate along with rotation of the wall-climbing cleaning robot 100, thereby ensuring the flexible steering of the wall-climbing cleaning robot 100. Meanwhile, the moving wheel 62 always maintains good adsorption with the wall surface, preventing the robot from slipping and overturning.

In an embodiment, the second magnetic adsorption structure 61 includes an arc-shaped second magnet protective shell 611 and a plurality of second magnets 612 arranged in an arc direction of the second magnet protective shell 611. The magnetism of the plurality of second magnets 612 gradually decreases from front to back in the arc direction of the second magnet protective shell 611.

Optionally, a central angle corresponding to an arc length of the second magnet protective shell 611 is 150° to 190°, preferably 170°, and is formed by the six different second magnets 612 arranged.

By adopting the above technical solution, during transition between the wall surfaces, this magnet arrangement makes the adsorption force of the wall-climbing cleaning robot 100 to the bottom contact surface 10 gradually decrease, so that the second magnetic adsorption mechanisms 6 of the wall-climbing cleaning robot 100 can more easily breaks away from the bottom contact surface 10 and transitions to the front transition surface 20. When the wall-climbing cleaning robot 100 is walking normally, the stainless steel universal wheel is in contact with the wall surface and can rotate with the rotation of the wall-climbing cleaning robot 100, thereby ensuring flexible steering of the robot. Meanwhile, the stainless steel universal wheel always maintains good adsorption with the wall surface, preventing the wall-climbing cleaning robot 100 from slipping and overturning.

Please referring to FIG. 1 again, in an embodiment, the wall-climbing cleaning robot 100 further includes a pipe holder 8 provided at the rear end of the frame 1.

By adopting the above technical solution, a pipe holder 8 is mounted at the rear end of the frame 1, which can fix the recovery pipe and the high-pressure water pipe through bolts, so that the weight of the pipe can directly act on the frame 1 of the wall-climbing air robot 100. As a result, the cleaning mechanism 5 is not directly affected by the weight of the pipe, which reduces the load of the cleaning mechanism 5 and prevents the cleaning mechanism 5 from overturning due to the influence of the weight of the pipe.

The specific implementation of the cleaning operation of the wall-climbing cleaning robot 100 with wall surface transition capability and rust removal cleaning function in the embodiment is as follows.

Taking the cleaning of a ship's cargo hold as an example, the wall-climbing cleaning robot 100 is first remotely controlled through a wireless remote control to walk upward from the bottom of the cargo hold along the inclined wall of the cargo hold. When the robot encounters the front transition surface 20 at a certain angle, due to the wall adaptive feature of the cleaning mechanism 5, the adaptive cleaning mechanism 5 rotates relative to the wall-climbing cleaning robot 100, and then transitions from one wall surface to another. After transitioning to another wall surface, the cleaning tool holder 54 maintains the original cleaning distance from the wall surface to ensure that the cleaning quality remains unchanged. During the subsequent wall surface transition, the wall-climbing cleaning robot 100 shall complete the above actions. When completing the wall surface transition and walking on a uniform wall surface, the wall-climbing cleaning robot 100 will perform a rust removal and cleaning task. The cleaning tool holder 54 sprays ultra-high-pressure water from the high-pressure pump onto the metal wall surface, and the ultra-high-pressure water acts to remove the rust. At the same time, the vacuum recovery device recovers the rust water into a special treatment device to prevent environmental pollution, thereby completing the rust removal and cleaning task inside the entire cargo hold.

To sum up, the advantages of the wall-climbing cleaning robot 100 in the embodiment are as follows.

In view of the characteristics of traditional manual cleaning such as low efficiency and poor safety, as well as the shortcomings of the wall-climbing cleaning robot 100 such as poor wall surface transition ability, single function, complex mechanism, and limited walking, a new type of wall-climbing cleaning robot 100 with wall surface transition ability and rust removal cleaning function is provided in the embodiment. The wall-climbing cleaning robot 100 is designed with first magnetic adsorption mechanisms 4 and second magnetic adsorption mechanisms 6, which are special and can complete the transition between wall surfaces. Meanwhile, the special arrangement of the first magnets 412 and the second magnets 612 greatly improves the utilization of magnetic energy, which brings a larger adsorption force to the wall-climbing cleaning robot 100 and improves a load capacity of the wall-climbing cleaning robot 100. In order to realize the adaptation of the cleaning mechanism 5 to the wall surface to be transitioned, a wall surface-adaptive cleaning mechanism 5 is designed, which can automatically adjust the inclined angle with the wall surface through its structural characteristics, and smoothly transition to another wall surface without any rigid collision with the wall surface in the whole process. Meanwhile, a compact frame 1 is designed, which greatly reduces the width of the wall-climbing cleaning robot 100 and allows the wall-climbing cleaning robot 100 to adapt to walking between floors in the cargo hold. The wall-climbing cleaning robot 100 adopts wheel-type walking instead of crawler-type walking, making the wall-climbing cleaning robot 100 more flexible in walking, which also improves the cleaning efficiency. The wall-climbing cleaning robot 100 in the embodiment, having a variety of functions, can perform both rust removal and cleaning operations, and can be used to remove rust from outer walls of the ship, clean the interior of ship cargo holds, and even clean the surface of wind towers, having various application scenarios. The wall-climbing cleaning robot 100 adopts a modular design as a whole, and includes a frame 1, a first drive mechanism 2, a second drive mechanism 3, first magnetic adsorption mechanisms 4, second magnetic adsorption mechanisms 6, a cleaning mechanism 5, a pipe holder 8, and a control cabinet 7. Connections between various parts are simple, and the disassembly and maintenance are convenient.

The above is merely preferred embodiments of the present application and is not intended to limit the present application. Any modifications, equivalent substitutions and improvements made within the gist and principle of the present application shall fall within the scope of protection of the present application.

## Claims

1. A wall-climbing cleaning robot, comprising:
a frame;
a first drive mechanism connected to the frame, the first drive mechanism being provided with a first driving wheel;
a second drive mechanism connected to the frame, the second drive mechanism being provided with a second driving wheel arranged opposite to the first driving wheel;
a first magnetic adsorption mechanism connected to the frame and located between the first driving wheel and the second driving wheel, the first magnetic adsorption mechanism being provided with a first magnetic adsorption structure that is magnetic, and a distance between the first magnetic adsorption structure and a prepared cleaning wall being adjustable; and
a cleaning mechanism located in front of the frame and rotatably connected to the frame.

2. The wall-climbing cleaning robot according to claim 1, wherein the first magnetic adsorption structure comprises an arc-shaped first magnet protective shell and a plurality of first magnets arranged in an arc direction of the first magnet protective shell.

3. The wall-climbing cleaning robot according to claim 2, wherein magnetism of the plurality of first magnets gradually decreases from top to bottom in the arc direction of the first magnet protective shell.

4. The wall-climbing cleaning robot according to claim 2, wherein the first magnetic adsorption structure further comprises a first magnet mounting base connected to the first magnet protective shell, an adjusting fastener is connected between the first magnet mounting base and the frame, and a position of the first magnet mounting base relative to the frame is adjustable to move the first magnets towards or away from the prepared cleaning wall.

5. The wall-climbing cleaning robot according to claim 2, wherein a central angle corresponding to an arc length of the first magnet protective shell is 100° to 140°.

6. The wall-climbing cleaning robot according to any one of claims 1 to 5, wherein the cleaning mechanism comprises a cleaning disc, a rotating arm and a clamping structure; the clamping structure is connected to a front rotating shaft of the frame, the cleaning disc is located in front of the frame, and the rotating arm is rotatably connected to the cleaning disc and the clamping structure so that the cleaning disc is rotatable around the front rotating shaft.

7. The wall-climbing cleaning robot according to claim 6, wherein the cleaning mechanism further comprises an telescopic push rod; the telescopic push rod is connected to the frame and the cleaning disc, and the telescopic push rod is capable of being extended and retracted to keep the cleaning disc in constant contact with the prepared cleaning wall.

8. The wall-climbing cleaning robot according to claim 6, wherein the cleaning mechanism further comprises a transition wheel mechanism arranged on the cleaning disc.

9. The wall-climbing cleaning robot according to any one of claims 1 to 5, further comprising a second magnetic adsorption mechanism; the second magnetic adsorption mechanism is connected to the frame and located on one side of the first magnetic adsorption mechanism away from the cleaning mechanism, the second magnetic adsorption mechanism comprises a second magnetic adsorption structure and a moving wheel, the moving wheel is rotatably connected to the frame, and the second magnetic adsorption structure is mounted on one side of the moving wheel.

10. The wall-climbing cleaning robot according to claim 9, wherein the second magnetic adsorption structure comprises an arc-shaped second magnet protective shell and a plurality of second magnets arranged in an arc direction of the second magnet protective shell, and magnetism of the plurality of second magnets gradually decreases from front to back in the arc direction of the second magnet protective shell.
